# EUROPÄISCHE PATENTANMELDUNG

(11) **EP 2 816 386 A1**
(43) Veröffentlichungstag der Anmeldung: **24.12.2014**
(21) Anmeldenummer: 13172697.8
(22) Anmeldetag: 19.06.2013
(51) Int. Cl.: G02B 7/00

(54) **Verfahren zum Ankleben eines Optikelements an einen Grundkörper**

(71) Anmelder: Trumpf Laser Marking Systems AG, 7214 Grüsch (CH)
(72) Erfinder: Sipma, Henrik, 7235 Fideris (CH)
(74) Vertreter: Kohler Schmid Möbus

(57) **Zusammenfassung**

Die Erfindung betrifft eine Optikanordnung (1) mit einem Optikelement (2), das über mindestens ein Halteelement (3) an einen Grundkörper (4) angeklebt ist. Erfindungsgemäß liegen das Optikelement (2) und das Halteelement (3) über eine optikelementseitig gekrümmte Fügeseite (6) und/oder eine halteelementseitig gekrümmte Fügeseite (7) entlang einer Kontaktlinie (8) unmittelbar aneinander an und sind mittels eines Klebstoffs (10) verklebt, der in mindestens eine neben der Kontaktlinie (8) zwischen den Fügeseiten (6, 7) vorhandene Fuge (10) eingebracht ist. Die Erfindung betrifft auch ein Verfahren zum Ankleben des Optikelements (2) über das Halteelement (3) an dem Grundkörper (4).

## Beschreibung

Die vorliegende Erfindung betrifft eine Optikanordnung mit einem Optikelement, das über mindestens ein Halteelement an einen Grundkörper angeklebt ist. Die Erfindung betrifft ferner ein Verfahren zum Ankleben eines Optikelements über ein Halteelement an einen Grundkörper.

Aus US 6 320 706 B1 ist eine Optikanordnung bekannt geworden, bei der ein optisches Element über einen quaderförmigen Hilfsblock an eine Platte geklebt wird. Dabei wird zum einen Klebstoff zwischen eine Fläche des Hilfsblocks und eine Fläche des optischen Elements und zum anderen zwischen eine Fläche der Platte und eine weitere Fläche des Hilfsblocks eingebracht. Um den zwischen diese Flächen eingebrachten Klebstoff gleichmäßig zu verteilen, wird der Hilfsblock relativ zur Platte und zum optischen Element geringfügig hin und her bewegt. Der zwischen den Flächen vorhandene Klebstoff kann jedoch mit der Zeit - z.B. aufgrund von Degradation - schrumpfen und zu einer verringerten Klebstoffschichtdicke führen, wodurch sich die geometrische Ausrichtung des optischen Elements bezüglich des Hilfsblocks und/oder der Platte verändert und sich das optische Element nicht mehr in seiner ursprünglichen Solllage befindet. Folglich kann die Funktion, die das optische Element erfüllen soll (z.B. das Reflektieren von Strahlung in einem bestimmten Winkel), beeinträchtigt sein.

Daher ist es die Aufgabe der vorliegenden Erfindung, eine Optikanordnung und ein Verfahren bereitzustellen, durch die die Nachteile des Standes der Technik überwunden oder zumindest abgemildert werden. Insbesondere soll eine geometrische Abweichung des optischen Elements aus seiner ursprünglichen Lage durch Langzeitwirkungen verhindert oder zumindest reduziert werden. Gleichzeitig soll ein einfaches und genaues geometrisches Anordnen und im Bedarfsfall Justieren der Elemente der Optikanordnung beim Zusammenfügen der Optikanordnung möglich sein.

Diese Aufgabe wird bei einer Optikanordnung der eingangs genannten Art erfindungsgemäß dadurch gelöst, dass das Optikelement und das Halteelement über eine optikelementseitig gekrümmte Fügeseite und/oder eine halteelementseitig gekrümmte Fügeseite entlang einer Kontaktlinie unmittelbar aneinander anliegen und mittels eines Klebstoffs verklebt sind, der in mindestens eine neben der Kontaktlinie zwischen den Fügeseiten vorhandene Klebefuge eingebracht ist.

Erfindungsgemäß ist durch die Anlage des Halteelements an dem Optikelement über die Kontaktlinie ein dauerhafter Kontakt gebildet, der durch den Klebstoff fixiert ist. Durch die unmittelbare Anlage der Optik- und Halteelemente entlang der Kontaktlinie führt eine z.B. degradationsbedingte Schrumpfung des Klebstoffs in den Fugen zu keiner Abstandsänderung zwischen den Optik- und Halteelementen. Alternativ oder zusätzlich können auch das Halteelement und der Grundkörper über eine halteelementseitig gekrümmte Fügeseite und/oder eine grundkörperseitig gekrümmte Fügeseite entlang einer Kontaktlinie unmittelbar aneinander anliegen und mittels eines Klebstoffs verklebt sein, der in mindestens eine neben der Kontaktlinie zwischen den Fügeseiten vorhandene Fuge eingebracht ist. Auch hier ist durch die Anlage des Halteelements an dem Grundkörper über die Kontaktlinie ein dauerhafter Kontakt gebildet, der durch den Klebstoff fixiert ist. Durch die unmittelbare Anlage von Halteelement und Grundkörper entlang der Kontaktlinie führt eine z.B. degradationsbedingte Schrumpfung des Klebstoffs in den Fugen zu keiner Abstandsänderung zwischen Halteelement und Grundkörper. Die erfindungsgemäßen Vorteile kommen insbesondere beim Ankleben der Elemente mittels eines Klebstoffs zum Tragen. Alternativ oder zusätzlich kann in die zwischen den Fügeseiten der Elemente vorhandenen Fugen erfindungsgemäß jedoch auch ein Lot eingebracht sein bzw. die jeweiligen Elemente können miteinander verlötet sein. Auch dann kann von den vorbeschriebenen Vorteilen Gebrauch gemacht werden. Der Grundkörper ist typischerweise eine Platte mit einer ebenen Oberfläche bzw. mit einer ebenen Fügeseite, kann aber auch eine gekrümmte Fügeseite aufweisen.

Besonders bevorzugt ist zwischen den beiden Fügeseiten beidseits der Kontaktlinie jeweils eine Fuge vorhanden in die der Klebstoff eingebracht ist. Dabei ist es besonders vorteilhaft, wenn die zwei beidseits der Kontaktlinie vorhandenen Fugen gleichhoch mit dem Klebstoff und damit symmetrisch zur Kontaktlinie gefüllt sind. Durch diese Symmetrie führt eine Schrumpfung des Klebstoffs in den Fugen zu keiner seitlichen Verlagerung der aneinander anliegenden Elemente.

Die Aufgabe wird bei dem eingangs genannten Verfahren erfindungsgemäß dadurch gelöst, dass das Optikelement und das mindestens eine Halteelement über eine optikelementseitig gekrümmte Fügeseite und/oder eine halteelementseitig gekrümmte Fügeseite entlang einer Kontaktlinie in unmittelbare gegenseitige Anlage gebracht werden und dass eine mindestens eine neben der Kontaktlinie zwischen den beiden Fügeseiten vorhandene Fuge mit Klebstoff gefüllt wird.

Durch das Verfahren ergeben sich hinsichtlich der verringerten oder gar gänzlich unterbundenen schrumpfungsbedingten geometrischen Abweichungen des Optikelements im Wesentlichen dieselben Vorteile wie bei der erfindungsgemäßen Optikanordnung. Zum Verkleben der Klebefuge wird die Klebefuge mit Klebstoff gefüllt, sodass sowohl eine optikelementseitige als auch eine halteelementseitige Fügeseite mit Klebstoff benetzt sind und sich nach dem Aushärten des Klebstoffs die relative Position des Optikelements zum Halteelement stabilisiert. Bevorzugt wird als Klebstoff ein UV-aushärtbarer Klebstoff verwendet. Alternativ oder zusätzlich kann entsprechend auch ein Lot verwendet werden.

Alternativ oder zusätzlich können auch das mindestens eine Halteelement und der Grundkörper über eine halteelementseitig gekrümmte Fügeseite und/oder eine grundkörperseitig gekrümmte Fügeseite entlang einer Kontaktlinie in unmittelbare gegenseitige Anlage gebracht werden, woraufhin mindestens eine neben der Kontaktlinie zwischen den Fügeseiten vorhandene Fuge mit Klebstoff gefüllt wird.

Vorzugsweise werden das Optikelement und/oder das mindestens eine Halteelement und/oder der Grundkörper derart in gegenseitige Anlage gebracht, dass das Optikelement in einer Solllage bezüglich des Grundkörpers angeordnet ist. Dabei kann das Optikelement entlang dreier translatorischer Achsen verschoben und/oder um drei rotatorische Achsen gedreht werden. Ferner wird zur Einnahme einer Solllage des Optikelements bezüglich des Grundkörpers bevorzugt ein Neigungswinkel zwischen dem Optikelement und dem Grundkörper durch Variieren eines Öffnungswinkels zwischen zwei Halteelementen eingestellt. Der Neigungswinkel ist ein beispielsweise zwischen einer Mitten- oder Längsachse des Optikelements und dem typischerweise ebenen Grundkörper gebildeter Winkel, wohingegen der Öffnungswinkel ein zwischen den beiden Halteelementen (beispielsweise deren Mitten- bzw. Längsachsen) gebildeter Winkel ist. Beispielsweise kann der Neigungswinkel eines auf zwei prismenförmigen Halteelementen aufliegenden Optikelements durch Variieren des Öffnungswinkels der zwei ihrerseits auf dem Grundkörper aufliegenden prismenförmigen Halteelemente (auf einen Sollwert) eingestellt werden.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Ausführungsform der erfindungsgemäßen Optikanordnung in einer Querschnittansicht;
- Fig. 2: eine vergrößerte Ansicht des Details II der Fig. 1;
- Fig. 3: eine alternative Ausführungsform der erfindungsgemäßen Optikanordnung in einer Querschnittsansicht;
- Fign. 4a, 4b: eine weitere Ausführungsform der erfindungsgemäßen Optikanordnung mit einem in einer Richtung ausgerichteten Optikelement in einer perspektivischen Ansicht (Fig. 4a) und einer Querschnittansicht (Fig. 4b); und
- Fign. 5a-5d: die Optikanordnung der Fig. 4 mit dem in einer anderen Richtung ausgerichteten Optikelement in einer perspektivischen Ansicht (Fig. 5a), einer ersten Seitenansicht (Fig. 5b), in einer Draufsicht von oben (Fig. 5c) und einer weiteren Seitenansicht (Fig. 5d).

In der folgenden Beschreibung der Zeichnung werden für gleiche bzw. funktionsgleiche Bauteile identische Bezugszeichen verwendet.

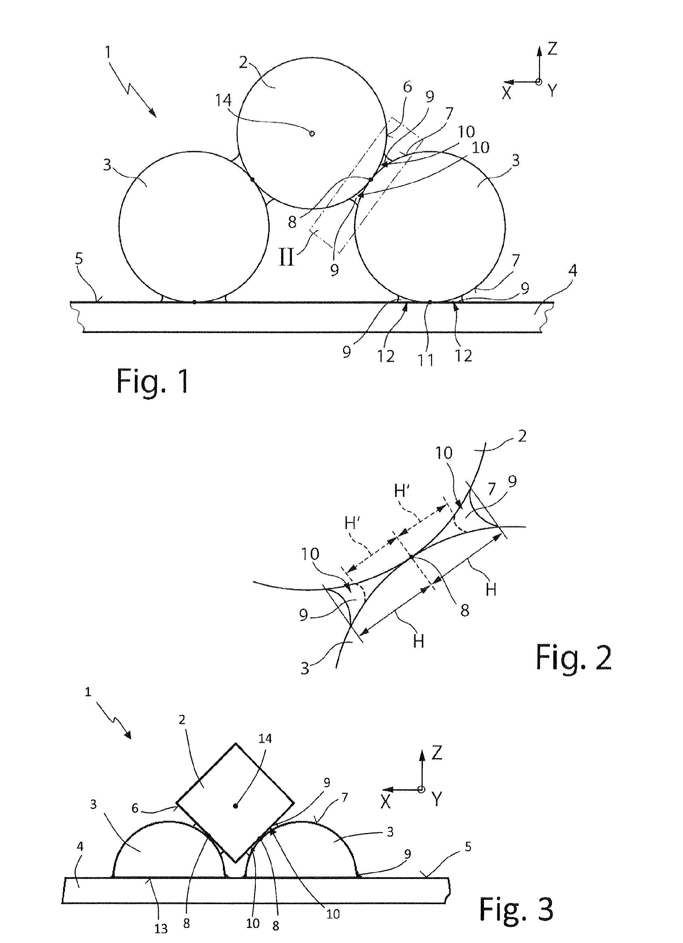

Bei der in **Fig. 1** gezeigten Optikanordnung **1** ist ein Optikelement **2** über zwei Halteelemente **3** an einen Grundkörper **4** angeklebt. Das Optikelement 2 und die Halteelemente 3 weisen jeweils eine zylindrische Form und der Grundkörper 4 eine ebene Fügeseite **5** auf. Bei dem Optikelement 2 handelt es sich beispielsweise um einen Spiegel, der in einer Solllage positioniert ist, um einen Laserstrahl in einem bestimmten Winkel zu reflektieren. Das Optikelement 2 kann beispielsweise ein optischer Polarisator, eine optische Linse, ein optisches Prisma, ein optischer Filter, eine Verzögerungs- oder Wellenplatte, ein linearer oder nicht-linearer Kristall, eine optische Diode, ein optischer Sensor, eine Lochkamera, eine Strahlfalle, ein optischer Modulator, eine optische Maske oder eine optische Blende sein.

Das Optikelement 2 mit seiner gekrümmten Fügeseite **6** und das jeweilige Halteelement 3 mit seiner gekrümmten Fügeseiten **7** liegen entlang einer Kontaktlinie **8** unmittelbar aneinander an und sind mittels eines Klebstoffs **9** verklebt, der in die beidseits der Kontaktlinie 8 zwischen den beiden gekrümmten Fügeseiten 6, 7 vorhandenen Fugen **10** eingebracht ist. Die beiden Halteelemente 3 mit ihrer gekrümmten Fügeseite 7 und der Grundkörper 4 mit seiner ebenen Fügeseite 5 liegen entlang einer Kontaktlinie **11** unmittelbar aneinander an und sind mittels eines Klebstoffs 9 verklebt, der in die beidseits der Kontaktlinie 11 zwischen der ebenen Fügeseite 5 und der gekrümmten Fügeseite 7 vorhandenen Fugen **12** eingebracht ist.

Wie in **Fig. 2** exemplarisch für die Befestigung zwischen den Optik- und Halteelementen 2, 3 gezeigt ist, liegen die Optik- und Halteelemente 2, 3 entlang der Kontaktlinie 8 unmittelbar aneinander an, so dass sich der Klebstoff 9 ausschließlich beidseits der Kontaktlinie 8 in den Fugen 10, aber nicht in der Kontaktlinie 8 befindet. Durch die unmittelbare Anlage der Optik- und Halteelemente 2, 3 entlang der Kontaktlinie 8 führt eine z.B. degradationsbedingte Schrumpfung des Klebstoffs 9 in den Fugen 10 zu keiner Abstandsänderung zwischen den Optik- und Halteelementen 2, 3. Die beiden Fugen 10 sind mit dem Klebstoff 9 gleichhoch (Klebstoffhöhe **H)** und damit symmetrisch zur Kontaktlinie 8 gefüllt. Durch diese Symmetrie führt eine Schrumpfung des Klebstoffs 9 in den Fugen 10 auf eine geringere Klebstoffhöhe **H'** zu keiner seitlichen Verlagerung der Optik- und Halteelemente 2, 3. Im Ergebnis verbleibt das Optikelement 2 auch über große Zeiträume hinweg in seiner ursprünglichen Lage.

Bei der in **Fig 3** gezeigten Optikanordnung 1 ist ein als Prisma ausgebildetes Optikelement 2 über zwei halbzylinderförmige Halteelemente 3 an dem Grundkörper 4 angeklebt. Das Optikelement 2 mit seiner ebenen Fügeseite 6 und das jeweilige Halteelement 3 mit seiner gekrümmten Fügeseite 7 liegen entlang einer Kontaktlinie 8 unmittelbar aneinander an und sind mittels eines Klebstoffs 9 verklebt, der in die beidseits der Kontaktlinie 8 zwischen der ebenen Fügeseite 6 und der gekrümmten Fügeseite 7 vorhandenen Fugen 10 eingebracht ist. Die beiden halbzylinderförmigen Halteelemente 3 mit ihren ebenen Fügeunterseiten **13** und der Grundkörper 4 mit seiner ebenen Fügeseite 5 liegen flächig unmittelbar aneinander an und sind lediglich an den Rändern miteinander mit Klebstoff 9 verklebt. Die Mittelachse **14** des prismenförmigen Optikelements 2 und die beiden Kontaktlinien 8 verlaufen parallel zueinander und parallel zur ebenen Fügeunterseite 13.

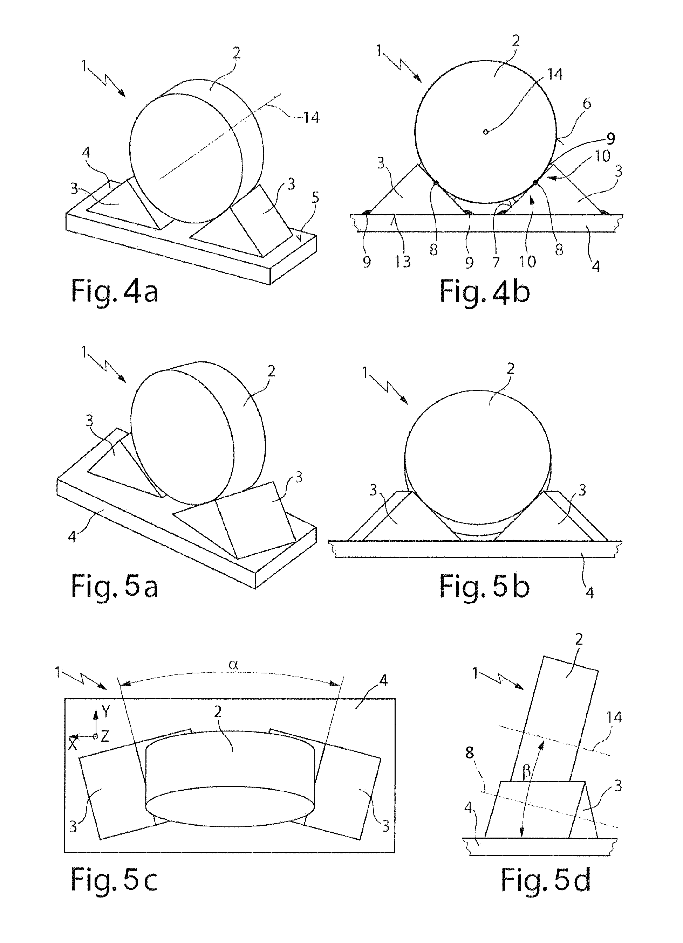

Bei der in **Fign. 4a** und **4b** gezeigten Optikanordnung 1 ist das zylinderförmige Optikelement 2 über zwei prismenförmige Halteelemente 3 an dem Grundkörper 4 angeklebt. Das Optikelement 2 mit seiner gekrümmten Fügeseite 6 und das jeweilige Halteelement 3 mit seiner ebenen Fügeseite 7 liegen entlang einer Kontaktlinie 8 unmittelbar aneinander an und sind mittels eines Klebstoffs 9 verklebt, der in die beidseits der Kontaktlinie 8 zwischen der gekrümmten Fügeseite 6 und der ebenen Fügeseite 7 vorhandenen Fugen 10 eingebracht ist. Die beiden Halteelemente 3 mit ihren ebenen Fügeunterseiten 13 und der Grundkörper 4 mit seiner ebenen Fügeseite 5 liegen flächig unmittelbar aneinander an und sind lediglich an den Rändern miteinander mit Klebstoff 9 verklebt. Die Mittelachse 14 des zylinderförmigen Optikelements 2 und die beiden Kontaktlinien 8 verlaufen parallel zueinander und parallel zur ebenen Fügeunterseite 13.

Im Unterschied zu den Fign. 4a, 4b ist bei der in **Fign. 5a-5d** gezeigten Optikanordnung 1 das zylinderförmige Optikelement 2 mit seiner Mittelachse 14 nicht parallel, sondern unter einem Neigungswinkel **β** (Fig. 5d) bezüglich der ebenen Fügeseite 5 des Grundkörpers 4 ausgerichtet und über die zwei prismenförmigen Halteelemente 3 an dem Grundkörper 4 angeklebt. Die geneigte Orientierung des Optikelements 2 ist dadurch möglich, dass die prismenförmigen Halteelemente 3 nicht wie in den Fign. 4a, 4b parallel, sondern unter einem (Öffnungs-)Winkel **α** (Fig. 5c) nebeneinander auf dem Grundkörper 4 angeordnet sind. Die beiden Kontaktlinien 8 zwischen der gekrümmten Fügeseite 6 des Optikelements 2 und der ebenen Fügeseite 7 des Halteelements 3 sind weiterhin parallel zueinander, aber unter dem Neigungswinkel ß bezüglich der ebenen Fügeseite 5 des Grundkörpers 4 ausgerichtet.

Mit Bezug zu sämtlichen vorhergehenden Figuren werden im Folgenden unterschiedliche Möglichkeiten des Zusammenfügens bzw. Anordnens verschiedener Optikanordnungen 1 vor dem klebenden Zusammenfügen beschrieben, bei denen das Optikelement 2 und/oder die Halteelemente 3 und/oder der Grundkörper 4 derart in gegenseitige Anlage gebracht werden, dass das Optikelement 2 in einer Solllage bezüglich des Grundkörpers 4 angeordnet ist.

Eine erste Möglichkeit besteht darin, das Optikelement 2 mittels einer in allen rotatorischen und translatorischen Freiheitsgraden bewegbaren Positioniereinrichtung (z.B. Greifer) zu bewegen und bezüglich dem Grundkörper 4 in einer Solllage zu positionieren. Anschließend können ein oder mehrere Halteelemente 3 derart zwischen dem Optikelement 2 und dem Grundkörper 4 angeordnet bzw. eingefügt werden, dass sich durch die gegenseitige Anlage jeweils zwischen dem Optikelement 2 und/oder dem bzw. den Halteelementen 3 und/oder dem Grundkörper 4 die Kontaktlinien 8, 11 einstellen. Beispielsweise können die beiden halbzylindrischen Halteelemente 3 der Fig. 3 von links und rechts solange auf dem Grundkörper 4 verschoben werden, bis sie, wie in Fig. 3 dargestellt, an dem prismenförmigen Optikelement 2 entlang der Kontaktlinien 8 anliegen. Alternativ können die beiden prismenförmigen Halteelemente 3 der Fig. 4 von links und rechts solange auf dem Grundkörper 4 verschoben werden, bis sie ebenfalls an dem zylinderförmigen Optikelement 2 entlang der Kontaktlinie 8 anliegen.

Eine zweite Möglichkeit besteht darin, zunächst ein oder mehrere Halteelemente 3 auf dem Grundkörper 4 und das Optikelement 2 auf dem oder den Halteelementen 3 in einer von der Solllage abweichenden Montage- oder Hilfslage abzulegen und ausgehend von dieser Montagelage durch relatives Bewegen des oder der Halteelemente 3 und des Optikelements 2 zueinander das Optikelement 2 auf einfache Weise in die Solllage zu bewegen. Dabei kann das Optikelement 2 durch Parallelverfahren der in Fign. 1-4 gezeigten zylinderförmigen, halbzylinderförmigen oder prismenförmigen Halteelemente 3 aufeinander zu oder voneinander fort in der Höhe geändert bzw. nachjustiert werden. Im Falle der in Fign. 4 und 5 gezeigten prismenförmigen Halteelemente 3 kann durch Verändern des Winkels α der Halteelemente 3 der Neigungswinkel ß geändert bzw. nachjustiert werden. Entsprechendes gilt auch für die in Fig. 3 gezeigte Optikanordnung 1 mit halbzylindrischen Halteelementen 3 und prismenförmigem Optikelement 2. Durch Verändern des (Öffnungs-)Winkels α zwischen diesen Halteelementen 3 kann der entsprechende Neigungswinkel ß eingestellt werden (nicht dargestellt). Es versteht sich, dass diese Möglichkeit auch bei einer Optikanordnung mit prismenförmigem Optikelement 3 und (voll-)zylindrischen Haltelementen 3 besteht.

Das auf den Halteelementen 3 anliegende Optikelement 2 kann entlang der X- und Y-Achsen durch Verschieben der Halteelemente 3 auf dem Grundkörper 4 und durch Abstandsänderung der beiden Halteelemente 3 in Richtung des Z-Achse translatorisch bewegt werden. Das auf den Halteelementen 3 anliegende zylindrische Optikelement 2 kann weiterhin frei um seine Mittelachse 14 sowie durch Verdrehen der Halteelemente 3 auf dem Grundkörper 4 um die Z-Achse gedreht werden. Durch Variieren des Winkels α zwischen den prismenförmigen (Fign. 5) oder (halb-)zylindrischen (Fig. 3) Halteelementen 3 kann zusätzlich der Neigungswinkel β des Optikelements 2 verändert werden. Insgesamt kann das Optikelement 2 in sechs Freiheitsgraden bewegt werden. Die Solllage des Optikelements 2 wird dann fixiert, indem die einzelnen Elemente 2, 3 4 wie oben beschrieben miteinander verklebt werden.

Anstatt an zwei Halteelementen 3, wie in den Fign. 1 bis 5 gezeigt, kann das Optikelement 2 auch über nur ein einziges Halteelement 3 an den Grundkörper 4 angeklebt werden.

## Patentansprüche

1. Optikanordnung (1) mit einem Optikelement (2), das über mindestens ein Halteelement (3) an einen Grundkörper (4) angeklebt ist,
**dadurch gekennzeichnet,**
**dass** das Optikelement (2) und das Halteelement (3) über eine optikelementseitig gekrümmte Fügeseite (6) und/oder eine halteelementseitig gekrümmte Fügeseite (7) entlang einer Kontaktlinie (8) unmittelbar aneinander anliegen und mittels eines Klebstoffs (9) verklebt sind, der in mindestens eine neben der Kontaktlinie (8) zwischen den Fügeseiten (6, 7) vorhandene Fuge (10) eingebracht ist.

2. Optikanordnung nach Anspruch 1 oder gemäß Oberbegriff von Anspruch 1,
**dadurch gekennzeichnet, dass** das Halteelement (3) und der Grundkörper (4) über eine halteelementseitig gekrümmte Fügeseite (7) und/oder eine grundkörperseitig gekrümmte Fügeseite entlang einer Kontaktlinie (11) unmittelbar aneinander anliegen und mittels eines Klebstoffs (9) verklebt sind, der in mindestens eine neben der Kontaktlinie (11) zwischen den Fügeseiten (5, 7) vorhandene Fuge (12) eingebracht ist.

3. Optikanordnung nach Anspruch 1 oder 2, **dadurch gekennzeichnet, dass** zwischen den beiden Fügeseiten (6, 7; 5, 7) beidseits der Kontaktlinie (8; 12) jeweils eine Fuge (10, 12) vorhanden ist, in die der Klebstoff (9) eingebracht ist.

4. Optikanordnung nach Anspruch 3, **dadurch gekennzeichnet, dass** die zwei beidseits der Kontaktlinie (8; 12) vorhandenen Fugen (10, 12) gleichhoch mit dem Klebstoff (9) gefüllt sind.

5. Optikanordnung nach einem der vorhergehenden Ansprüche, **dadurch gekennzeichnet, dass** das Optikelement (2) eine runde, insbesondere zylindrische Form aufweist und über zwei jeweils als Prismen ausgebildete Halteelemente (3) an dem Grundkörper (4) angeklebt ist.

6. Optikanordnung nach einem der Ansprüche 1 bis 4, **dadurch gekennzeichnet,**
**dass** das Optikelement (2) als Prisma ausgebildet ist und über zwei runde, insbesondere halbzylindrische, Halteelemente (3) an dem Grundkörper (4) angeklebt ist.

7. Optikanordnung nach einem der vorhergehenden Ansprüche, **dadurch gekennzeichnet, dass** das Optikelement (2) über zwei Halteelemente (3) an dem Grundkörper (4) angeklebt ist.

8. Verfahren zum Ankleben eines Optikelements (2) über mindestens ein Halteelement (3) an einem Grundkörper (4), insbesondere zum Herstellen einer Optikanordnung (1) nach einem der vorhergehenden Ansprüche,
**dadurch gekennzeichnet,**
**dass** das Optikelement (2) und das mindestens eine Halteelement (3) über eine optikelementseitig gekrümmte Fügeseite (8) und/oder eine halteelementseitig gekrümmte Fügeseite (7) entlang einer Kontaktlinie (8) in unmittelbare gegenseitige Anlage gebracht werden und dass mindestens eine neben der Kontaktlinie (8) zwischen den Fügeseiten (6, 7) vorhandene Fuge (10) mit Klebstoff (9) gefüllt wird.

9. Verfahren nach Anspruch 8 oder gemäß Oberbegriff von Anspruch 8, **dadurch gekennzeichnet, dass** das mindestens eine Halteelement (3) und der Grundkörper (4) über eine halteelementseitig gekrümmte Fügeseite (7) und/oder eine grundkörperseitig gekrümmte Fügeseite entlang einer Kontaktlinie (11) in unmittelbare gegenseitige Anlage gebracht werden und dass mindestens eine neben der Kontaktlinie (11) zwischen den Fügeseiten (5, 7) vorhandene Fuge (12) mit Klebstoff (9) gefüllt wird.

10. Verfahren nach Anspruch 8 oder 9, **dadurch gekennzeichnet, dass** das Optikelement (2) und/oder das mindestens eine Halteelement (3) und/oder der Grundkörper (4) derart in gegenseitige Anlage gebracht werden, dass das Optikelement (2) in einer Solllage bezüglich des Grundkörpers (4) angeordnet ist.

11. Verfahren nach einem der Ansprüche 8 bis 10, **dadurch gekennzeichnet, dass** zur Einnahme einer Solllage des Optikelements (2) bezüglich des Grundkörpers (4) der Neigungswinkel (β) zwischen dem Optikelement (2) und dem Grundkörper (4) durch Variieren eines Öffnungswinkels (α) zwischen zwei Halteelementen (3) eingestellt wird.

12. Verfahren nach einem der Ansprüche 8 bis 10, **dadurch gekennzeichnet, dass** das Optikelement (2) jeweils entlang einer Kontaktlinie (8; 11) in unmittelbare gegenseitige Anlage mit zwei Halteelementen (3) gebracht wird.
